# EUROPÄISCHE PATENTSCHRIFT

(11) **EP 3 069 039 B1**
(45) Veröffentlichungstag und Bekanntmachung des Hinweises auf die Patenterteilung: **13.12.2017**
(21) Anmeldenummer: 14799333.1
(22) Anmeldetag: 20.10.2014
(51) Int. Cl.: F16D 23/12, H02K 49/00

(54) **BETÄTIGUNGSEINRICHTUNG FÜR EINE KUPPLUNGSEINRICHTUNG**
ACTUATION DEVICE FOR A CLUTCH DEVICE
DISPOSITIF D'ACTIONNEMENT POUR UN DISPOSITIF D'EMBRAYAGE

(30) Priorität: 13.11.2013 DE 102013223044; 28.03.2014 DE 102014205851
(43) Veröffentlichungstag der Anmeldung: 21.09.2016
(73) Patentinhaber: Schaeffler Technologies AG & Co. KG, 91074 Herzogenaurach (DE)
(72) Erfinder: HELMER, Daniel, 77883 Ottenhöfen (DE); FINKENZELLER, Marc, 77723 Gengenbach (DE)
(86) Internationale Anmeldenummer: PCT/DE2014/200570
(87) Internationale Veröffentlichungsnummer: WO 2015/070854

(56) Entgegenhaltungen:
- DE-A1-102012 222 110
- US-A1- 2005 040 000
- US-A1- 2005 079 943
- US-A1- 2008 149 451

## Beschreibung

Die Erfindung betrifft eine Betätigungseinrichtung für eine Kupplungseinrichtung gemäß dem Oberbegriff des Anspruchs 1.

Aus jeder der US 2005/079943 A1, der US 2005/0400000 A1 und der DE 10 2012 222 110 A1 1 ist eine Betätigungseinrichtung für eine Kupplungseinrichtung gemäß dem Oberbegriff des Anspruchs 1 bekannt.

Der Erfindung liegt die Aufgabe zugrunde, eine eingangs genannte Betätigungseinrichtung baulich und/oder funktional zu verbessern. Insbesondere sollen die Vorteile einer Wirbelstrombremse und die Vorteile einer Hysteresebremse kombiniert werden. Insbesondere soll ein Bremsmoment auch ohne Relativdrehung zwischen dem Bremsenstator und dem Bremsenrotor generierbar sein. Insbesondere soll eine Drehzahlabhängigkeit reduziert oder vermieden werden. Insbesondere soll auch bei höheren Differenzdrehzahlen zwischen dem Bremsenstator und dem Bremsenrotor ein erhöhtes Bremsmoment generierbar sein. Insbesondere soll ein über einen Drehzahlbereich zumindest annähernd konstantes Bremsmoment generiert sein. Insbesondere soll eine Regelbarkeit eines Bremsmoments verbessert sein. Insbesondere soll ein Bremsmoment über einen erweiterten Drehzahlbereich zur Verfügung stehen.

Diese Aufgabe wird mit den in Anspruch 1 angegebenen Maßnahmen gelöst.

Weitere vorteilhafte Ausgestaltungen sind Gegenstand der abhängigen Ansprüche.

Eine Betätigungseinrichtung für eine Kupplungseinrichtung weist eine Magnetfeldbremse mit einem Bremsenstator und einem Bremsenrotor auf, wobei die Magnetfeldbremse als Wirbelstrombremse und/oder als Hysteresebremse betreibbar ist. Der Bremsenstator weist einen Innenstator auf. Der Innenstator weist eine Zentralspule auf. Der Bremsenstator weist einen spulenlosen Außenstator auf.

Die Betätigungseinrichtung kann eine Drehachse aufweisen. Der Bremsenrotor und der Bremsenstator können zusammen und/oder relativ zueinander um die Drehachse drehbar sein.

Die Kupplungseinrichtung kann zur Anordnung in einem Antriebsstrang eines Kraftfahrzeugs dienen. Der Antriebsstrang kann eine Brennkraftmaschine, eine elektrische Maschine mit einem Stator und einem Rotor, eine Getriebeeinrichtung und wenigstens ein antreibbares Fahrzeugrad aufweisen. Die Kupplungseinrichtung kann in dem Antriebsstrang zwischen der Brennkraftmaschine einerseits und der elektrischen Maschine sowie der Getriebeeinrichtung andererseits anordenbar sein. Die Kupplungseinrichtung kann eine Drehachse aufweisen. Die Kupplungseinrichtung kann eine Reibungskupplung aufweisen. Die Kupplungseinrichtung kann eine Lamellenkupplung aufweisen. Die Kupplungseinrichtung kann wenigstens eine Au-ßenlamelle und wenigstens eine Innenlamelle aufweisen. Die wenigstens eine Außenlamelle und/oder die wenigstens eine Innenlamelle kann Reibbeläge aufweisen. Die wenigstens eine Außenlamelle kann dem Rotor und/oder der Getriebeeinrichtung zugeordnet sein. Die wenigstens eine Innenlamelle kann der Brennkraftmaschine zugeordnet sein. Die Kupplungseinrichtung kann ein Gehäuse aufweisen. Das Gehäuse kann mithilfe des Rotors gebildet sein. Die Kupplungseinrichtung kann eine Anpressplatte aufweisen. Die Kupplungseinrichtung kann eine Druckplatte aufweisen. Die Anpressplatte kann relativ zur Druckplatte axial begrenzt verlagerbar sein. Die wenigstens eine Außenlamelle und die wenigstens eine Innenlamelle können zwischen der Anpressplatte und der Druckplatte einklemmbar sein.

Die Kupplungseinrichtung kann ein Kupplungseingangsteil und ein Kupplungsausgangsteil aufweisen. Die Bezeichnungen "Kupplungseingangsteil" und "Kupplungsausgangsteil" sind auf eine zu dem wenigstens einen antreibbaren Fahrzeugrad hin gerichtete Leistungsflussrichtung bezogen. Das Kupplungseingangsteil kann die wenigstens eine Innenlamelle aufweisen. Das Kupplungseingangsteil kann mit der Brennkraftmaschine antriebsverbindbar sein. Das Kupplungsausgangsteil kann die wenigstens eine Außenlamelle aufweisen. Das Kupplungsausgangsteil kann mit dem der elektrischen Antriebsmaschine antriebsverbindbar sein. Das Kupplungsausgangsteil kann mit dem Rotor der elektrischen Antriebsmaschine antriebsverbindbar sein. Das Kupplungsausgangsteil kann mit dem der Getriebeeinrichtung antriebsverbindbar sein. Das Kupplungsausgangsteil kann mit der Eingangswelle der Getriebeeinrichtung antriebsverbindbar sein.

Die Kupplungseinrichtung kann ausgehend von einer vollständig ausgerückten Betätigungsstellung, in der zwischen dem Kupplungseingangsteil und dem Kupplungsausgangsteil im Wesentlichen keine Leistungsübertragung erfolgt, bis hin zu einer vollständig eingerückten Betätigungsstellung, in der zwischen dem Kupplungseingangsteil und dem Kupplungsausgangsteil im Wesentlichen eine vollständige Leistungsübertragung erfolgt, betätigungsabhängig eine zunehmende Leistungsübertragung ermöglichen, wobei eine Leistungsübertragung zwischen dem Kupplungseingangsteil und dem Kupplungsausgangsteil kraftschlüssig, insbesondere reibschlüssig, erfolgen kann. Umgekehrt kann ausgehend von einer vollständig eingerückten Betätigungsstellung, in der zwischen dem Kupplungseingangsteil und dem Kupplungsausgangsteil im Wesentlichen eine vollständige Leistungsübertragung erfolgt, bis hin zu einer vollständig ausgerückten Betätigungsstellung, in der zwischen dem Kupplungseingangsteil und dem Kupplungsausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein. Mithilfe der Betätigungseinrichtung kann die Anpressplatte der Kupplungseinrichtung axial verlagerbar sein. Mithilfe der Betätigungseinrichtung kann die Kupplungseinrichtung geöffnet oder geschlossen werden. Mithilfe der Betätigungseinrichtung kann die Kupplungseinrichtung eingerückt oder ausgerückt werden.

Die Betätigungseinrichtung kann eine verdrehbare Rampeneinrichtung mit ersten Rampen und zweiten Rampen aufweisen. Die Betätigungseinrichtung kann eine in Sperrrichtung oder Freigaberichtung betätigbare Freilaufeinrichtung aufweisen. Die ersten Rampen und die zweiten Rampen können jeweils ringartig in Umfangsrichtung der Kupplungseinrichtung angeordnet sein. Die ersten Rampen und die zweiten Rampen können einander axial gegenüberliegend angeordnet sein. Die ersten Rampen und die zweiten Rampen können relativ zueinander verdrehbar sein. Die Rampeneinrichtung kann ausgehend von einer Bewegung in Umfangsrichtung der Kupplungseinrichtung eine Bewegung in axialer Richtung ermöglichen. Die Rampeneinrichtung kann axial wirksam sein. Zwischen den ersten Rampen und den zweiten Rampen können Wälzkörper, insbesondere Kugeln, angeordnet sein. Die Rampen können jeweils Laufflächen für die Wälzkörper bilden. Die Rampen können jeweils als Wälzkörperrampen, insbesondere als Kugelrampen, ausgebildet sein. Die Rampen können in Umfangsrichtung der Kupplungseinrichtung verteilt angeordnet sein. Die Rampen können jeweils zu einer zur Drehachse der Kupplungseinrichtung senkrechten Ebene schief sein. Die Rampen können jeweils in Umfangsrichtung der Kupplungseinrichtung ansteigen und/oder abfallen. Die Rampen können jeweils einseitig ansteigend sein. Die Rampen können jeweils beidseitig ansteigend sein. Die ersten Rampen und die zweiten Rampen können jeweils zueinander geometrisch komplementär ausgebildet sein. Die ersten Rampen können mit den zweiten Rampen jeweils derart korrespondieren, dass sich bei einer Bewegung der ersten Rampen und der zweiten Rampen in Umfangsrichtung der Kupplungseinrichtung relativ zueinander die ersten Rampen und die zweiten Rampen in Erstreckungsrichtung der Drehachse der Kupplungseinrichtung voneinander weg oder aufeinander zu bewegen. Die ersten Rampen können die Wälzkörper von radial innen stützen. Die zweiten Rampen können die Wälzkörper von radial außen stützen. Die Wälzkörper können einen derartigen Durchmesser aufweisen, dass sie zwischen den ersten Rampen und den zweiten Rampen verliersicher gehalten sind. Die Wälzkörper können in einem Wälzkörperkäfig angeordnet sein. Damit ist eine gleichmäßige Zuordnung der Wälzkörper zu den Rampen gewährleistet. Die zweiten Rampen können an der Anpressplatte der Kupplungseinrichtung angeordnet sein.

Die Freilaufeinrichtung kann einen Innenring und einen Außenring aufweisen. Der Innenring kann als Innenstern ausgeführt sein. Die Freilaufeinrichtung kann Klemmkörper aufweisen. Die Klemmkörper können zwischen dem Innenring und dem Außenring wirken. Mithilfe der Freilaufeinrichtung kann ein Verdrehen von Innenring und Außenring relativ zueinander in einer ersten Drehrichtung ermöglicht und in einer zur ersten Drehrichtung entgegengesetzten zweiten Drehrichtung gesperrt sein. Die erste Drehrichtung kann die Freigaberichtung und die zweite Drehrichtung kann die Sperrrichtung sein. Der Innenring kann der Brennkraftmaschine zugeordnet sein. Der Außenring kann der Betätigungseinrichtung zugeordnet sein. Die Freilaufeinrichtung kann ein Übertragungselement aufweisen. Das Übertragungselement kann topfartig geformt sein. Das Übertragungselement kann an dem Außenring angeordnet sein. Die ersten Rampen können an dem Übertragungselement der Freilaufeinrichtung angeordnet sein.

Die Kupplungseinrichtung kann mithilfe eines von der Brennkraftmaschine erzeugten Moments betätigbar sein. Die Kupplungseinrichtung kann mithilfe der Brennkraftmaschine schließbar sein. Die Kupplungseinrichtung kann mithilfe eines von der Brennkraftmaschine erzeugten Moments schließbar sein. Die Kupplungseinrichtung kann durch Steuerung einer Drehzahl der Brennkraftmaschine betätigbar sein. Die Kupplungseinrichtung kann durch Steuerung einer Drehzahl der Brennkraftmaschine schließbar und/oder öffenbar sein.

Die Freilaufeinrichtung kann in Sperrrichtung und die Kupplungseinrichtung kann in Schließrichtung betätigt sein, wenn eine Drehzahl einer der Brennkraftmaschine zugeordneten Welle größer als eine Drehzahl des Kupplungsausgangsteils und/oder des Rotors, ist. Die Freilaufeinrichtung kann in Freigaberichtung und die Kupplungseinrichtung kann in Öffnungsrichtung betätigt sein, wenn eine Drehzahl einer der Brennkraftmaschine zugeordneten Welle kleiner als eine Drehzahl des Kupplungsausgangsteils und/oder des Rotors, ist.

Die Betätigungseinrichtung kann einen Momentenfühler aufweisen. Der Momentenfühler kann zwischen der Brennkraftmaschine und der Kupplungseinrichtung, insbesondere dem Kupplungseingangsteil, angeordnet sein. Der Momentenfühler kann ein erstes Fühlerteil und ein zweites Fühlerteil aufweisen. Das erste Fühlerteil und das zweite Fühlerteil können relativ zueinander begrenzt verdrehbar sein. Das erste Fühlerteil kann mit der Brennkraftmaschine drehfest verbunden sein. Das zweite Fühlerteil kann mit der Kupplungseinrichtung, insbesondere dem Kupplungseingangsteil, drehfest verbunden sein. Der Momentenfühler kann wenigstens einen Energiespeicher aufweisen. Der wenigstens eine Energiespeicher kann zwischen dem ersten Fühlerteil und dem zweiten Fühlerteil wirksam sein. Der wenigstens eine Energiespeicher kann sich einerseits an dem ersten Fühlerteil und andererseits an dem zweiten Fühlerteil abstützen. Der Momentenfühler kann dazu dienen, dass die Freilaufeinrichtung erst ab einem vorbestimmten Offsetmoment sperrt, wenn eine Drehzahl der Brennkraftmaschine grö-ßer als eine Drehzahl der Kupplungseinrichtung ist. Der Momentenfühler kann dazu dienen, ein Öffnen der Kupplungseinrichtung zu gewährleisten, wenn eine Drehzahl der Brennkraftmaschine kleiner als eine Drehzahl der Kupplungseinrichtung ist.

Die Magnetfeldbremse kann zum Schließen der Kupplungseinrichtung dienen. Zur Ansteuerung der Magnetfeldbremse kann eine elektrische Steuereinrichtung vorgesehen sein. Mithilfe der Magnetfeldbremse kann die Betätigungseinrichtung derart beaufschlagbar sein, dass sich die ersten Rampen und die zweiten Rampen relativ zueinander verdrehen.

Die Magnetfeldbremse kann eine Wirbelstrombremse sein. Die Wirbelstrombremse kann Wirbelstromverluste des in einem Magnetfeld bewegten Bremsenrotors zum Bremsen nutzen. Die Magnetfeldbremse kann eine Hysteresebremse sein. Die Hysteresebremse kann auf der Wirkung des Bremsenstators auf den sich bewegenden Bremsenrotor basieren. Der Bremsenstator kann einen Elektromagnet aufweisen. Der Elektromagnet kann zur Erzeugung eines Magnetfelds dienen. Zwischen dem Bremsenstator und dem Bremsenrotor kann ein Luftspalt gebildet sein. Das Magnetfeld kann regelbar sein.

Der Bremsenrotor kann einen ersten Rotorabschnitt aus einem ersten Material aufweisen. Das erste Material kann einen geringen elektrischen Widerstand aufweisen. Das erste Material kann eine gute elektrische Leitfähigkeit aufweisen. Der erste Rotorabschnitt kann ein Material, wie Aluminiumlegierung oder Kupferlegierung, aufweisen.

Der Bremsenrotor kann einen zweiten Rotorabschnitt aus einem zweiten Material aufweisen. Das zweite Material kann ein magnetisch halbhartes Material sein. Das zweite Material kann eine CoFeNi-, CoFrV-, FeCrCo-, FeCrCoMo-, FeCrCoNiMo und/oder AINiCo-Legierung sein. Das zweite Material kann einen unmagnetisierten Dauermagnetwerkstoff mit hoher Remanenz und geringer Koerzitivfeldstärke aufweisen.

Der Bremsenstator kann mehrteilig sein. Der Bremsenstator kann zweiteilig sein. Der Bremsenstator kann dreiteilig sein. Der Innenstator kann radial innenseitig angeordnet sein. Der Außenstator kann radial außenseitig angeordnet sein. Der Innenstator kann einen ersten Magnetpol bilden. Der Außenstator kann einen zweiten Magnetpol bilden. Der Bremsenstator kann eine einzige Spule aufweisen. Die Zentralspule kann die einzige Spule sein. Die Zentralspule kann eine rotationssymmetrische Form aufweisen. Die Zentralspule kann eine Spulenachse aufweisen. Die Spulenachse kann zur Drehachse koaxial sein.

Der Bremsenrotor kann eine topfartige Form mit einem Bodenabschnitt und einem Wandabschnitt aufweisen. Der Wandabschnitt kann zwischen dem Innenstator und dem Außenstator angeordnet sein. Der Bremsenrotor kann einen Wirbelstromabschnitt und einen Hystereseabschnitt aufweisen. Der Wirbelstromabschnitt und der Hystereseabschnitt können an dem Wandabschnitt angeordnet sein. Der Innenstator und der Außenstator können einen Wirkbereich für den Wirbelstromabschnitt und den Hystereseabschnitt begrenzen. Der erste Rotorabschnitt kann den Wirbelstromabschnitt aufweisen. Der zweite Rotorabschnitt kann den Hystereseabschnitt aufweisen oder bilden. Der erste Rotorabschnitt kann einen Träger für den zweiten Rotorabschnitt bilden. Der zweite Rotorabschnitt kann eine ringartige Form aufweisen. Der zweite Rotorabschnitt kann mit dem ersten Rotorabschnitt verpresst sein.

Der Innenstator kann einen ersten Klauenpol mit ersten Polklauen und einen zweiten Klauenpol mit zweiten Polklauen aufweisen. Die Zentralspule kann von dem ersten Klauenpol mit seinen ersten Polklauen und dem zweiten Klauenpol mit seinen zweiten Polklauen umgriffen sein. Der Außenstator kann eine flachringartige Form aufweisen. Der Außenstator kann magnetisch permeabel sein. Der Außenstator kann in radialer Richtung dünn ausgeführt sein. Der Innenstator kann radial innenseitig des Wandabschnitts des Bremsenrotors angeordnet sein. Der Außenstator kann radial außenseitig des Wandabschnitts des Bremsenrotors angeordnet sein.

Der erste Klauenpol kann einen Scheibenabschnitt aufweisen. Der Scheibenabschnitt des ersten Klauenpols kann einen radial äußeren Rand aufweisen. Die ersten Polklauen können an dem radial äußeren Rand des Scheibenabschnitts des ersten Klauenpols angeordnet sein. Die ersten Polklauen können zumindest abschnittsweise zu dem Scheibenabschnitt des ersten Klauenpols in etwa rechtwinklig angeordnet sein. Die ersten Polklauen können an dem Scheibenabschnitt des ersten Klauenpols in Umfangsrichtung verteilt angeordnet sein. Zwischen den ersten Polklauen können Lücken gebildet sein. Der zweite Klauenpol kann einen Scheibenabschnitt aufweisen. Der Scheibenabschnitt des zweiten Klauenpols kann einen radial äußeren Rand aufweisen. Die zweiten Polklauen können an dem radial äußeren Rand des Scheibenabschnitts des zweiten Klauenpols angeordnet sein. Die zweiten Polklauen können zumindest abschnittsweise zu dem Scheibenabschnitt des zweiten Klauenpols in etwa rechtwinklig angeordnet sein. Die zweiten Polklauen können an dem Scheibenabschnitt des zweiten Klauenpols in Umfangsrichtung verteilt angeordnet sein. Zwischen den zweiten Polklauen können Lücken gebildet sein.

Der erste Klauenpol und der zweite Klauenpol können mit ihren Scheibenabschnitten zueinander parallel und voneinander beabstandet angeordnet sein. Die ersten Polklauen können jeweils ein freies Ende aufweisen. Die zweiten Polklauen können jeweils ein freies Ende aufweisen. Der erste Klauenpol und der zweite Klauenpol können derart angeordnet sein, dass die freien Enden der ersten Polklauen und die freien Enden der zweiten Polklauen einander entgegen gerichtet sind. Die ersten Polklauen und die zweiten Polklauen können jeweils wechselnd ineinandergreifen. Die ersten Polklauen können in die zwischen den zweiten Polklauen gebildeten Lücken eingreifen. Die zweiten Polklauen können in die zwischen den ersten Polklauen gebildeten Lücken eingreifen. Die freien Enden der ersten Polklauen und die freien Enden der zweiten Polklauen können jeweils schmal zulaufend ausgeführt sein.

Der Bremsenrotor kann mit seinem Wandabschnitt radial außenseitig des Innenstators angeordnet sein. Der Bremsenrotor kann mit seinem Wandabschnitt radial innenseitig des Außenstators angeordnet sein. Der Bremsenrotor kann mit seinem Wandabschnitt radial zwischen den Polklauen der Klauenpole und dem flachringförmigen Außenstator angeordnet sein. Der Bremsenrotor kann mit seinem Bodenabschnitt an dem Scheibenabschnitt des zweiten Klauenpols angeordnet sein. Der Bremsenrotor kann mit seinem Bodenabschnitt zu dem Scheibenabschnitt des zweiten Klauenpols parallel angeordnet sein.

Der Bremsenstator kann einen ersten Klauenpol mit ersten Polklauen aufweisen, der den Außenstator bildet. Der Bremsenstator kann einen zweiten Klauenpol mit zweiten Polklauen aufweisen, der den Innenstator bildet. Die Zentralspule kann von dem zweiten Klauenpol mit seinen zweiten Polklauen umgriffen sein.

Die ersten Polklauen können radial äußere Polklauen sein. Die zweiten Polklauen können radial innere Polklauen sein. Die inneren Polklauen können bezogen auf die Drehachse radial weiter innen als die äußeren Polklauen angeordnet sein. Die äußeren Polklauen können bezogen auf die Drehachse radial weiter außen als die inneren Polklauen angeordnet sein. Zwischen den äußeren Polklauen und den inneren Polklauen kann ein Ringspalt als Wirkbereich gebildet sein. Der Ringspalt kann umlaufend sein. Der Ringspalt kann eine flachringartige Form aufweisen. Der Ringspalt kann axial einseitig zugänglich sein. Der Ringspalt kann abschnittsweise offen sein. Der Ringspalt kann mithilfe der äußeren Polklauen und der inneren Polklauen abschnittsweise geschlossen sein. Der Ringspalt kann von den äußeren Polklauen und den inneren Polklauen begrenzt sein.

Der erste Klauenpol kann einen ersten Scheibenabschnitt aufweisen. Der erste Scheibenabschnitt kann einen radial äußeren Rand aufweisen. Die äußeren Polklauen können an dem radial äußeren Rand des ersten Scheibenabschnitts angeordnet sein. Die äußeren Polklauen können zumindest abschnittsweise zu dem ersten Scheibenabschnitt in etwa rechtwinklig angeordnet sein. Die äußeren Polklauen können an dem ersten Scheibenabschnitt in Umfangsrichtung verteilt angeordnet sein. Zwischen den äußeren Polklauen können Lücken gebildet sein.

Der zweite Klauenpol kann einen zweiten Scheibenabschnitt aufweisen. Der zweite Scheibenabschnitt kann einen radial äußeren Rand aufweisen. Die inneren Polklauen können an dem radial äußeren Rand des zweiten Scheibenabschnitts angeordnet sein. Die inneren Polklauen können zumindest abschnittsweise zu dem zweiten Scheibenabschnitt in etwa rechtwinklig angeordnet sein. Die inneren Polklauen können an dem zweiten Scheibenabschnitt in Umfangsrichtung verteilt angeordnet sein. Zwischen den inneren Polklauen können Lücken gebildet sein.

Der erste Klauenpol und der zweite Klauenpol können mit ihren Scheibenabschnitten zueinander parallel und voneinander beabstandet angeordnet sein. Die äußeren Polklauen können jeweils ein freies Ende aufweisen. Die inneren Polklauen können jeweils ein freies Ende aufweisen. Der erste Klauenpol und der zweite Klauenpol können derart angeordnet sein, dass die freien Enden der äußeren Polklauen und die freien Enden der inneren Polklauen einander entgegen gerichtet sind. Die äußeren Polklauen und die inneren Polklauen können in Umfangsrichtung jeweils wechselnd angeordnet sein. Die äußeren Polklauen können den zwischen den inneren Polklauen gebildeten Lücken gegenüberliegend angeordnet sein. Die inneren Polklauen können den zwischen den äußeren Polklauen gebildeten Lücken gegenüberliegend angeordnet sein. Die freien Enden der äußeren Polklauen und die freien Enden der inneren Polklauen können jeweils schmal zulaufend ausgeführt sein.

Der Bremsenrotor kann mit seinem Wandabschnitt radial außenseitig des Innenstators angeordnet sein. Der Bremsenrotor kann mit seinem Wandabschnitt radial innenseitig des Außenstators angeordnet sein. Der Bremsenrotor kann mit seinem Wandabschnitt radial zwischen den äußeren Polklauen und den inneren Polklauen angeordnet sein. Der Bremsenrotor kann mit seinem Bodenabschnitt an dem Scheibenabschnitt des zweiten Klauenpols angeordnet sein. Der Bremsenrotor kann mit seinem Bodenabschnitt zu dem Scheibenabschnitt des zweiten Klauenpols parallel angeordnet sein.

Zusammenfassend und mit anderen Worten dargestellt ergibt sich somit durch die Erfindung unter anderem eine Kombination von Wirbelstrombremse und Hysteresebremse. Eine konstuktive Ausführung weist einen äußeren und einen inneren Stator auf. In dem Stator kann ein Magnetfeld geführt werden, dessen Flussdichte abhängig von einem Wert eines elektrischen Stroms in einer Wicklung ist, welche von dem inneren Stator umschlossen wird. Dabei können zwei Klauenpole den inneren Stator bilden, das Magnetfeld kann dann durch einen äußeren Stator in Ringform geschlossen werden. Alternativ kann ein Klauenpol den inneren Stator und der zweite Klauenpol den äußeren Stator bilden. Ein Rotor kann aus zwei verschiedenen Materialschichten hergestellt sein. Eine Schicht kann aus einem Werkstoff mit geringem elektrischen Widerstand (z.B. Aluminium, Kupfer,...) bestehen. In dieser Schicht sollen sich Wirbelströme ausbreiten und für ein höheres Moment bei höheren Drehzahlen sorgen. Die zweite Schicht kann aus magnetisch halbhartem Material bestehen. Hier kann durch Ummagnetisierung bereits ab Drehzahl Null ein Bremsmoment erzeugt werden. Aluminium kann als Trägermaterial dienen. Ein Hysteresematerial kann in Form eines Ringes in den Aluminiumträger eingepresst sein.

Mit der erfindungsgemäßen Betätigungseinrichtung werden die Vorteile einer Wirbelstrombremse und die Vorteile einer Hysteresebremse kombiniert. Ein Bremsmoment ist auch ohne Relativdrehung zwischen dem Bremsenstator und dem Bremsenrotor generierbar. Eine Drehzahlabhängigkeit ist reduziert oder vermieden. Auch bei höheren Differenzdrehzahlen zwischen dem Bremsenstator und dem Bremsenrotor ist ein erhöhtes Bremsmoment generierbar. Ein zumindest annähernd konstantes Bremsmoment ist über einen erweiterten Drehzahlbereich generierbar. Eine Regelbarkeit eines Bremsmoments ist verbessert. Ein Bremsmoment steht über einen erweiterten Drehzahlbereich zur Verfügung.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einer in dem Antriebsstrang angeordneten Kupplungseinrichtung,
- Fig. 2: einen Rotor einer elektrischen Antriebsmaschine mit integrierter Kupplungseinrichtung und Betätigungseinrichtung für einen Antriebsstrang eines Kraftfahrzeugs,
- Fig. 3: eine Magnetfeldbremse für eine Betätigungseinrichtung einer Kupplungseinrichtung für einen Antriebsstrang eines Kraftfahrzeugs,
- Fig. 4: einen Innenstator einer Magnetfeldbremse für eine Betätigungseinrichtung einer Kupplungseinrichtung für einen Antriebsstrang eines Kraftfahrzeugs,
- Fig. 5: eine Magnetfeldbremse mit einem Bremsenstator und einem Bremsenrotor in perspektivischer Schnittansicht,
- Fig. 6: eine Magnetfeldbremse mit einem Bremsenstator und einem Bremsenrotor in perspektivischer Schnittansicht,
- Fig. 7: einen Bremsenrotor mit einem ersten Rotorabschnitt zum Betreiben einer Magnetfeldbremse als Wirbelstrombremse und einem zweiten Rotorabschnitt zum Betreiben der Magnetfeldbremse als Hysteresebremse,
- Fig. 8: ein Diagramm zu Bremsmomenten einer Magnetfeldbremse bei einem Betrieb als Wirbelstrombremse und einem Betrieb als Hysteresebremse und
- Fig. 9: ein Diagramm zu magnetisch halbharten Materialien.

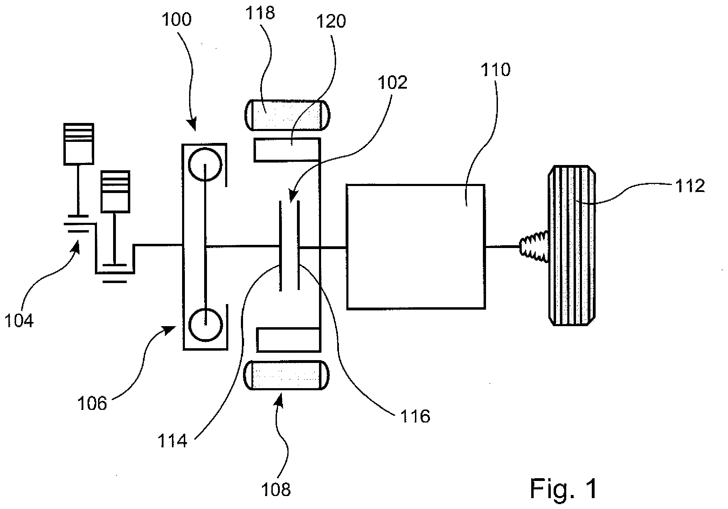

Fig. 1 zeigt einen Antriebsstrang 100 eines hier ansonsten nicht näher dargestellten Kraftfahrzeugs mit einem parallelen Vollhybridantrieb und einer in dem Antriebsstrang 100 angeordneten Kupplungseinrichtung 102. Der Antriebsstrang 100 weist eine Brennkraftantriebsmaschine 104, ein Zweimassenschwungrad 106, die Kupplungseinrichtung 102, eine elektrische Antriebsmaschine 108, ein Getriebe 110 und wenigstens ein antreibbares Rad 112 auf. Die Antriebsmaschine 108 ist als Motor betreibbar. Die Kupplungseinrichtung 102 ist in dem Antriebsstrang 100 zwischen dem Zweimassenschwungrad 106 und der elektrischen Antriebsmaschine 108 angeordnet. Die Kupplungseinrichtung 102 ist in dem Antriebsstrang 100 zwischen dem Zweimassenschwungrad 106 und dem Getriebe 110 angeordnet.

Die Kupplungseinrichtung 102 weist ein Kupplungseingangsteil 114 und ein Kupplungsausgangsteil 116 auf. Das Kupplungseingangsteil 114 ist mit dem Zweimassenschwungrad 106 verbunden. Das Kupplungsausgangsteil 116 ist mit der elektrischen Antriebsmaschine 108 verbunden. Die elektrische Antriebsmaschine 108 weist einen Stator 118 und einen Rotor 120 auf. Das Kupplungsausgangsteil 116 ist mit dem Rotor 120 der elektrischen Antriebsmaschine 108 verbunden. Das Kupplungsausgangsteil 116 ist mit dem Getriebe 110 verbunden. Die elektrische Antriebsmaschine 108 ist mit dem Getriebe 110 verbunden. Der Rotor 120 der elektrischen Antriebsmaschine 108 ist mit dem Getriebe 110 verbunden.

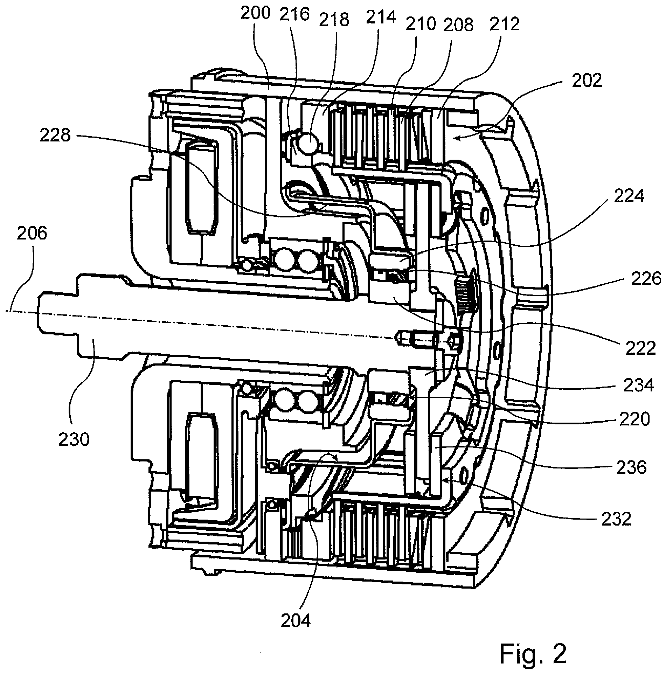

Fig. 2 zeigt einen Rotor 200 einer hier ansonsten nicht näher dargestellten elektrischen Antriebsmaschine mit integrierter Lamellenkupplung 202, wie Kupplungseinrichtung 102 gemäß Fig. 1, mit einer Betätigungseinrichtung 204 für ein Kraftfahrzeug mit einem Hybridantrieb.

Der Rotor 200 weist eine Drehachse 206 auf. Der Rotor 200 weist eine topfartige Form auf. In dem Rotor 200 ist ein zylindrischer Aufnahmeraum gebildet. Die Lamellenkupplung 202 und die Betätigungseinrichtung 204 sind in dem Aufnahmeraum angeordnet. Die Lamellenkupplung 202 und die Betätigungseinrichtung 204 sind in Erstreckungsrichtung der Drehachse 206 sowie in radialer Richtung innerhalb des Rotors 200 angeordnet.

Die Lamellenkupplung 202 weist ein Kupplungseingangsteil und ein Kupplungsausgangsteil auf. Das Kupplungseingangsteil weist Innenlamellen, wie 208, auf. Die Innenlamellen 208 sind der Brennkraftantriebsmaschine zugeordnet. Das Kupplungsausgangsteil weist Außenlamellen, wie 210, auf. Die Außenlamellen 210 sind mit dem Rotor 200 drehfest verbunden. Die Lamellenkupplung 202 weist eine Druckplatte 212 und eine Anpressplatte 214 auf. Die Innenlamellen 208 und die Außenlamellen 210 sind zwischen der Druckplatte 212 und der Anpressplatte 214 jeweils abwechselnd angeordnet. Die Druckplatte 212 ist mit dem Rotor 200 fest verbunden. Die Anpressplatte 214 ist mit dem Rotor 200 drehfest verbunden und relativ zu der Druckplatte 212 axial begrenzt verlagerbar. Damit sind die Lamellen 208, 210 zwischen der Druckplatte 212 und der Anpressplatte 214 einklemmbar. Mithilfe der Betätigungseinrichtung 204 ist die Anpressplatte 214 in Kupplungsschließrichtung beaufschlagbar.

Die Betätigungseinrichtung 204 weist eine Rampeneinrichtung auf. Die Rampeneinrichtung weist einen Rampenring 216 mit ersten Rampen auf. Die Rampeneinrichtung weist zweite Rampen auf. Die zweiten Rampen sind an der Anpressplatte 214 angeordnet. Der Rampenring 216 mit den ersten Rampen ist um die Drehachse 206 relativ zu der Anpressplatte 214 mit den zweiten Rampen verdrehbar. Zwischen den ersten Rampen und den zweiten Rampen sind Kugeln, wie 218, angeordnet. Die Betätigungseinrichtung 204 weist eine Freilaufeinrichtung 220 auf. Die Freilaufeinrichtung 220 weist einen Innenring 222, einen Außenring 224 und Sperrkörper, wie 226, auf. Eine erste Drehrichtung der Freilaufeinrichtung 220 ist eine Sperrrichtung, eine der ersten Drehrichtung entgegengesetzte zweite Drehrichtung ist eine Freigaberichtung. In Freigaberichtung sind der Innenring 222 und der Außenring 224 relativ zueinander verdrehbar. In Sperrrichtung verhindern die Sperrkörper 226 eine Relativverdrehung zwischen Innenring 222 und Außenring 224, sodass eine mechanische Leistung übertragbar ist. Die Freilaufeinrichtung 220 weist einen Freilauftopf 228 auf. Der Freilauftopf 228 ist einerseits mit dem Außenring 224 und andererseits mit dem Rampenring 216 der Betätigungseinrichtung 204 fest verbunden. Der Innenring 222 ist fest mit einer Welle 230 verbunden, die ihrerseits mit der Brennkraftantriebsmaschine antriebsverbunden ist.

Wenn eine Drehzahl der Welle 230 größer als eine Drehzahl des Kupplungsausgangsteils bzw. des Rotors 200, ist, wird die Freilaufeinrichtung 220 in Sperrrichtung betätigt. Über den Innenring 222, die Sperrkörper 226, den Außenring 224 und den Freilauftopf 228 wird dann der Rampenring 216 verdreht. Das Verdrehen des Rampenrings 216 bewirkt dann über die Kugeln 218 eine axiale Beaufschlagung der Anpressplatte 214 in Kupplungsschließrichtung. Wenn eine Drehzahl der Welle 230 kleiner als eine Drehzahl des Kupplungsausgangsteils bzw. des Rotors 200, ist, wird die Freilaufeinrichtung 220 in Freigaberichtung betätigt. Die Anpressplatte 214 ist dann nicht beaufschlagt und die Lamellenkupplung 202 kann öffnen.

Die Betätigungseinrichtung weist einen Momentenfühler 232 auf. Der Momentenfühler 232 ist zwischen der Welle 230 und dem Kupplungseingangsteil der Lamellenkupplung 202 angeordnet. Der Momentenfühler 232 weist ein erstes Fühlerteil 234 und ein zweites Fühlerteil 236 auf. Das erste Fühlerteil 234 und das zweite Fühlerteil 236 sind relativ zueinander begrenzt verdrehbar. Das erste Fühlerteil 234 ist mit der Welle 230 drehfest verbunden. Das zweite Fühlerteil 236 ist mit dem Kupplungseingangsteil drehfest verbunden. Der Momentenfühler 236 weist Energiespeicher auf, die sich einerseits an dem ersten Fühlerteil 234 und andererseits an dem zweiten Fühlerteil 236 abstützen. Der Momentenfühler 232 dient dazu, dass die Freilaufeinrichtung 220 erst ab einem vorbestimmten Offsetmoment sperrt, wenn einer Drehzahl der Welle 230 größer als eine Drehzahl des Rotors 200 ist. Der Momentenfühler 232 dient dazu, ein Öffnen der Lamellenkupplung 202 zu gewährleisten, wenn einer Drehzahl der Welle 230 kleiner als eine Drehzahl des Stators 200 ist. Im Übrigen wird ergänzend insbesondere auf Fig. 1 und die zugehörige Beschreibung verwiesen.

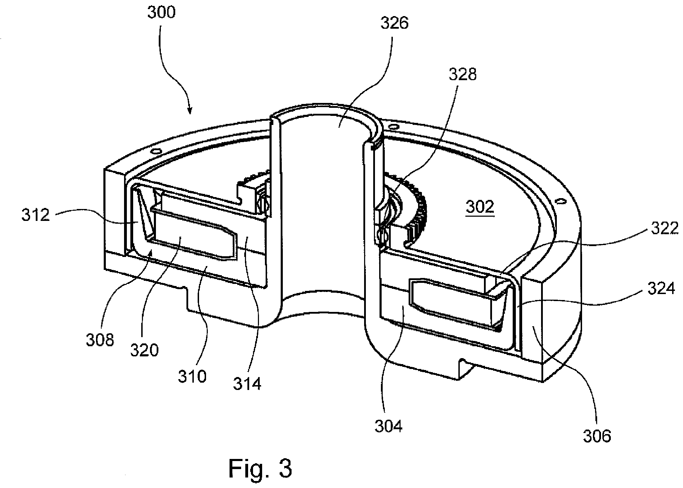

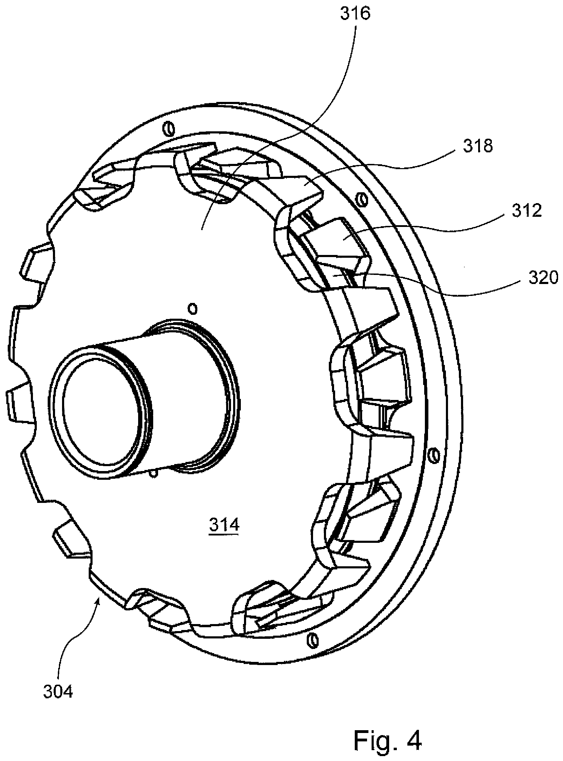

Fig. 3 zeigt eine Magnetfeldbremse 300 für eine Betätigungseinrichtung einer Kupplungseinrichtung für einen Antriebsstrang eines Kraftfahrzeugs, wie Betätigungseinrichtung 204 gemäß Fig. 2. Die Magnetfeldbremse 300 weist einen Bremsenstator und einen Bremsenrotor 302 auf. Der Bremsenstator weist einen Innenstator 304 und einen Außenstator 306 auf. Fig. 4 zeigt den Innenstator 304. Der Innenstator 304 weist einen ersten Klauenpol 308 mit einem Scheibenabschnitt 310 und Polklauen, wie 312, auf. Der Innenstator 304 weist einen zweiten Klauenpol 314 mit einem Scheibenabschnitt 316 und Polklauen, wie 318, auf. Der Innenstator 304 weist eine Zentralspule 320 auf.

Die Polklauen 312 des ersten Klauenpols 308 sind an dem Scheibenabschnitt 310 radial außenseitig angeordnet. Die Polklauen 312 des ersten Klauenpols 308 sind jeweils zu dem Scheibenabschnitt 310 in etwa 90° gewinkelt und weisen jeweils ein freies schmal zulaufendes Ende auf. Die Polklauen 312 des ersten Klauenpols 308 sind an dem Scheibenabschnitt 310 in Umfangsrichtung verteilt angeordnet. Zwischen den Polklauen 312 des ersten Klauenpols 308 sind Lücken gebildet.

Die Polklauen 318 des zweiten Klauenpols 314 sind an dem Scheibenabschnitt 316 radial außenseitig angeordnet. Die Polklauen 318 des zweiten Klauenpols 314 sind jeweils zu dem Scheibenabschnitt 316 in etwa 90° gewinkelt und weisen jeweils ein freies schmal zulaufendes Ende auf. Die Polklauen 318 des zweiten Klauenpols 314 sind an dem Scheibenabschnitt 316 in Umfangsrichtung verteilt angeordnet. Zwischen den Polklauen 318 des zweiten Klauenpols 314 sind Lücken gebildet.

Der erste Klauenpol 308 mit seinem Scheibenabschnitt 310 und der zweite Klauenpol 314 mit seinem Scheibenabschnitt 316 sind beidseits der Zentralspule 320 angeordnet. Die Polklauen 312 des ersten Klauenpols 308 und die Polklauen 318 des zweiten Klauenpols 314 umgreifen die Zentralspule 320 radial außenseitig. Die freien Enden der Polklauen 312 des ersten Klauenpols 308 und die freien Enden der Polklauen 318 des zweiten Klauenpols 314 sind einander entgegen gerichtet. Die Polklauen 312 des ersten Klauenpols 308 und die Polklauen 318 des zweiten Klauenpols 314 greifen wechselnd ineinander. Der erste Klauenpol 308 und der zweite Klauenpol 314 umgreifen die Zentralspule 320 radial innenseitig.

Der Bremsenrotor 302 weist eine topfartige Form mit einem Bodenabschnitt 322 und einem Wandabschnitt 324 auf. Der Bremsenrotor 302 ist mit seinem Bodenabschnitt 322 an dem zweiten Klauenpol 314 und mit seinem Wandabschnitt 324 radial außenseitig des Innenstators 304 angeordnet.

Der Außenstator 306 ist spulenlos ausgeführt und weist eine dünne, flachringartige Form auf. Der Außenstator 306 ist magnetisch permeabel. Der Außenstator 306 ist radial außenseitig des Bremsenrotors 302 angeordnet.

Der Innenstator 304 und der Außenstator 306 sind mit einem Trägerteil 326 fest verbunden. Das Trägerteil 326 weist einen Flanschabschnitt und einen Nabenabschnitt auf. Das Trägerteil 326 und der Außenstator 306 bilden eine gehäuseartige Aufnahme für den Innenstator 304 und den Bremsenrotor 302. Der erste Klauenpol 308 ist an dem Flanschabschnitt des Trägerteils 326 angeordnet. Der Nabenabschnitt des Trägerteils 326 ragt durch eine zentrale Ausnehmung des Innenstators 304 hindurch. Der Bremsenrotor 302 ist mithilfe eines Lagers 328 drehbar an dem Nabenabschnitt des Trägerteils 326 gelagert. Im Übrigen wird ergänzend insbesondere auf Fig. 1-2 und die zugehörige Beschreibung verwiesen.

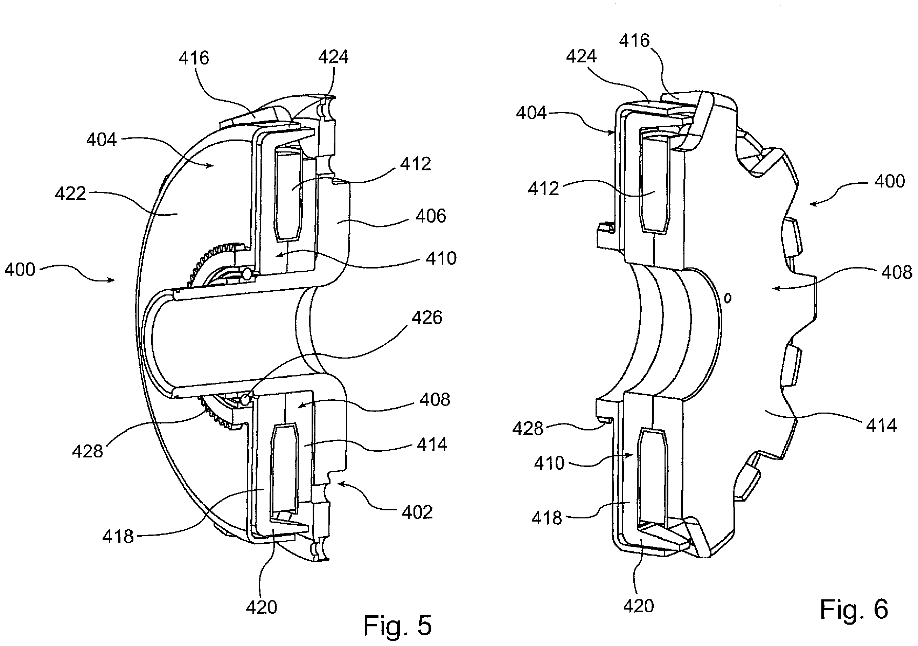

Fig. 5 zeigt eine Magnetfeldbremse 400 mit einem Bremsenstator 402 und einem Bremsenrotor 404 in perspektivischer Schnittansicht. Der Bremsenstator 402 weist ein Trägerteil 406, einen ersten Klauenpol 408, einen zweiten Klauenpol 410 und eine Zentralspule 412 auf. Fig. 6 zeigt die Magnetfeldbremse 400 in perspektivischer Schnittansicht ohne das Trägerteil 406.

Der erste Klauenpol 408 weist einen ersten Scheibenabschnitt 414 und äußere Polklauen, wie 416, auf. Der erste Klauenpol 408 bildet einen Außenstator. Der zweite Klauenpol 410 weist einen zweiten Scheibenabschnitt 418 und innere Polklauen, wie 420, auf. Der zweite Klauenpol 410 bildet einen Innenstator. Die äußeren Polklauen 416 sind an dem ersten Scheibenabschnitt 414 radial außenseitig angeordnet. Die äußeren Polklauen 416 sind jeweils zu dem ersten Scheibenabschnitt 414 in etwa 90° gewinkelt und weisen jeweils ein freies schmal zulaufendes Ende auf. Die äußeren Polklauen 416 sind an dem ersten Scheibenabschnitt in Umfangsrichtung verteilt angeordnet. Zwischen den äußeren Polklauen 416 sind Lücken gebildet.

Die inneren Polklauen 420 des zweiten Klauenpols 410 sind an dem zweiten Scheibenabschnitt 418 radial außenseitig angeordnet. Die inneren Polklauen 420 sind jeweils zu dem zweiten Scheibenabschnitt 418 in etwa 90° gewinkelt und weisen jeweils ein freies schmal zulaufendes Ende auf. Die inneren Polklauen 420 sind an dem zweiten Scheibenabschnitt 418 in Umfangsrichtung verteilt angeordnet. Zwischen den inneren Polklauen 420 sind Lücken gebildet.

Die äußeren Polklauen 416 sind in Umfangsrichtung den zwischen den inneren Polklauen 420 gebildeten Lücken gegenüberliegend angeordnet. Die inneren Polklauen 420 sind in Umfangsrichtung den zwischen den äußeren Polklauen 416 gebildeten Lücken gegenüberliegend angeordnet. Die äußeren Polklauen 416 sind bezogen auf die Drehachse der Magnetfeldbremse 400 bzw. des Bremsenstators 402 radial weiter außen als die inneren Polklauen 420 angeordnet. Die inneren Polklauen 420 sind bezogen auf die Drehachse radial weiter innen als die äußeren Polklauen 416 angeordnet. Zwischen den äußeren Polklauen 416 und den inneren Polklauen 420 ist ein umlaufender Ringspalt als magnetischer Wirkbereich für den Bremsenrotor 404 gebildet.

Der erste Klauenpol 408 mit dem ersten Scheibenabschnitt 414 und der zweite Klauenpol 410 mit dem zweiten Scheibenabschnitt 418 sind beidseits der Zentralspule 412 angeordnet. Die äußeren Polklauen 416 des ersten Klauenpols 408 und die inneren Polklauen 420 des zweiten Klauenpols 410 umgreifen die Zentralspule 412 radial außenseitig. Die freien Enden der äußeren Polklauen 416 und die freien Enden der inneren Polklauen 420 sind einander entgegen gerichtet. Der erste Klauenpol 408 und der zweite Klauenpol 410 umgreifen die Zentralspule 412 radial innenseitig.

Der Bremsenrotor 404 weist eine topfartige Form mit einem Bodenabschnitt 422 und einem Wandabschnitt auf. Der Wandabschnitt bildet einen Wandabschnitt 424 des Bremsenrotors 404. Der Bremsenrotor 404 ist mit seinem Bodenabschnitt 422 an dem zweiten Klauenpol 410 und mit seinem Wandabschnitt 424 in dem zwischen den äußeren Polklauen 416 und den inneren Polklauen 420 gebildeten Ringspalt angeordnet. Der Wandabschnitt 424 ist radial innenseitig der äußeren Polklauen 416 und radial außenseitig der inneren Polklauen 420 angeordnet.

Der erste Klauenpol 408 und der zweite Klauenpol 410 sind mit dem Trägerteil 406 fest verbunden. Das Trägerteil 406 weist einen Flanschabschnitt und einen Nabenabschnitt auf. Das Trägerteil 406 bildet eine Aufnahme für den ersten Klauenpol 408, den zweiten Klauenpol 410 und den Bremsenrotor 404. Der erste Klauenpol 408 ist mit dem ersten Scheibenabschnitt 414 an dem Flanschabschnitt des Trägerteils 406 angeordnet. Der Nabenabschnitt des Trägerteils 406 ragt durch eine zentrale Ausnehmung des ersten Klauenpols 408 und des zweiten Klauenpols 410 hindurch. Der Bremsenrotor 404 ist mithilfe eines Lagers 426 drehbar an dem Nabenabschnitt des Trägerteils 406 gelagert. Der Bremsenrotor 404 weist eine Au-ßenverzahnung 428 auf. Im Übrigen wird ergänzend insbesondere auf Fig. 1-2 und die zugehörige Beschreibung verwiesen.

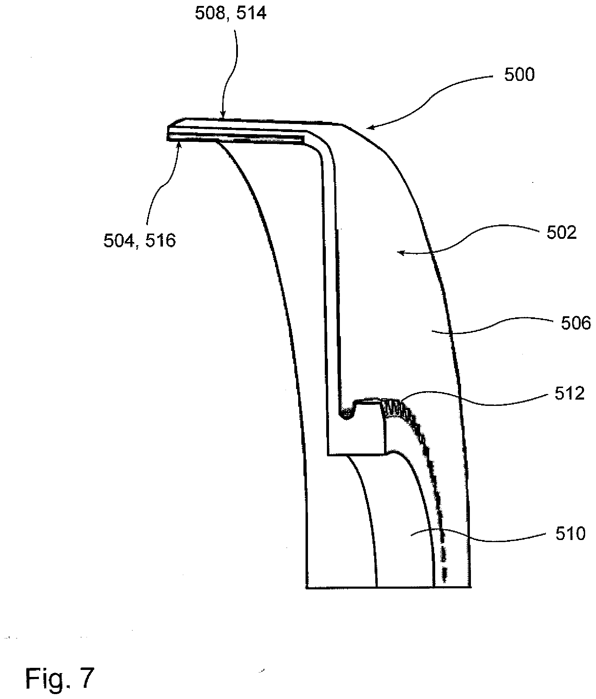

Fig. 7 zeigt einen Bremsenrotor 500 mit einem ersten Rotorabschnitt 502 zum Betreiben einer Magnetfeldbremse, wie Magnetfeldbremse 300 gemäß Fig. 3-4 oder Magnetfeldbremse 400 gemäß Fig. 5-6, als Wirbelstrombremse und einem zweiten Rotorabschnitt 504 zum Betreiben der Magnetfeldbremse als Hysteresebremse.

Der erste Rotorabschnitt 502 weist eine topfartige Form mit einem Bodenabschnitt 506 und einem Wandabschnitt 508 auf. Der Bremsenrotor 500 weist eine zentrische Öffnung 510 auf. Die Öffnung 510 ist an dem Bodenabschnitt 506 des ersten Rotorabschnitts 502 angeordnet. Der Bremsenrotor 500 weist eine Verzahnung 512 auf. Die Verzahnung 512 ist außenseitig an der Öffnung 510 angeordnet. Der Wandabschnitt 508 weist eine flachringartige Form auf.

Der Bremsenrotor 500 weist einen Wirbelstromabschnitt 514 und einen Hystereseabschnitt 516 auf. Der Wandabschnitt 508 des ersten Rotorabschnitts 502 bildet den Wirbelstromabschnitt 514. Der zweite Rotorabschnitt 504 weist eine flachringartige Form auf. Der zweite Rotorabschnitt 504 ist radial innenseitig des Wandabschnitts 508 des ersten Rotorabschnitts 502 angeordnet. Der zweite Rotorabschnitt 504 ist in den ersten Rotorabschnitt 502 eingepresst. Der erste Rotorabschnitt 502 dient somit als Träger für den zweiten Rotorabschnitt 504.

Der erste Rotorabschnitt 502 ist aus einem elektrisch gut leitenden Material, wie Aluminiumlegierung oder Kupferlegierung, hergestellt. Der zweite Rotorabschnitt 504 ist aus einem magnetisch halbharten Material, wie CoFeNi-, CoFrV-, FeCrCo-, FeCrCoMo-, FeCrCoNiMo und/oder AINiCo-Legierung, hergestellt.

Bei einem Betrieb der Magnetfeldbremse als Wirbelstrombremse werden Wirbelstromverluste des in einem Magnetfeld bewegten Wirbelstromabschnitts 514 zum Bremsen genutzt. Bei einem Betrieb der Magnetfeldbremse als Hysteresebremse wird eine Wirkung des Magnetfelds auf den sich bewegenden Hystereseabschnitt 516 genutzt. Im Übrigen wird ergänzend insbesondere auf Fig. 3-6 und die zugehörige Beschreibung verwiesen.

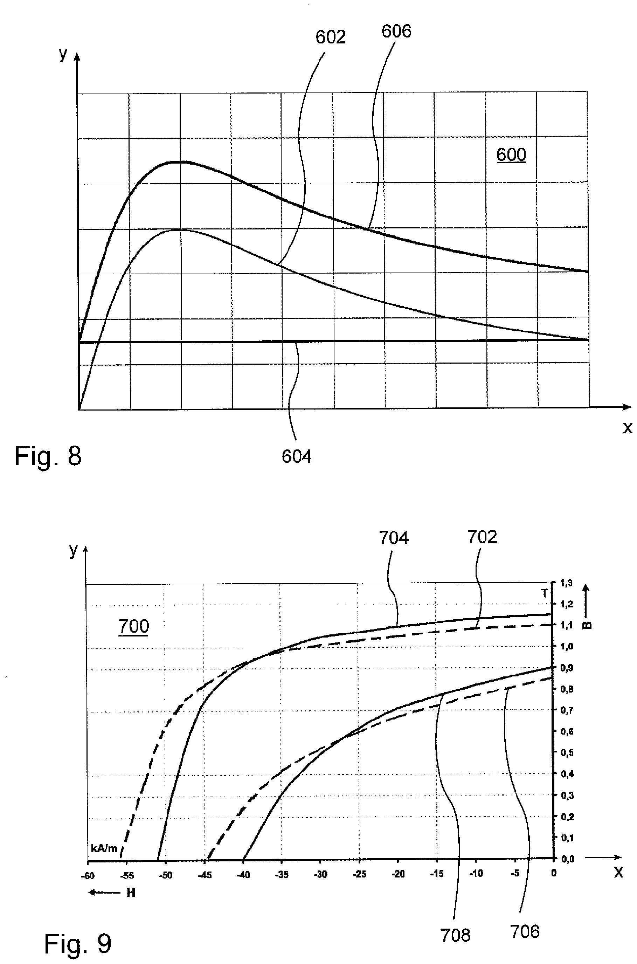

Fig. 8 zeigt ein Diagramm 600 zu Bremsmomenten einer Magnetfeldbremse, wie Magnetfeldbremse 300 gemäß Fig. 3-4 oder Magnetfeldbremse 400 gemäß Fig. 5-6, bei einem Betrieb als Wirbelstrombremse und einem Betrieb als Hysteresebremse. In dem Diagramm 600 ist auf einer x-Achse eine Drehzahl in U/min und auf einer y-Achse ein Moment in Nm aufgetragen. Die Kennlinie 602 zeigt einen Momentverlauf bei einem Betrieb als Wirbelstrombremse. Die Kennlinie 604 zeigt einen Momentverlauf bei einem Betrieb als Hysteresebremse. Die Kennlinie 606 zeigt eine Summe der Kennlinien 602, 604. Es ist ersichtlich, dass bereits bei einer Drehzahl 0 ein Bremsmoment erzeugbar ist. Bei einem Betrieb der Magnetfeldbremse kann jeweils zwischen den Kennlinien 602, 604, 606 gewechselt werden, indem ein Betrieb als Wirbelstrombremse, als Hysteresebremse oder kombiniert erfolgt. Im Übrigen wird ergänzend insbesondere auf Fig. 3-7 und die zugehörige Beschreibung verwiesen.

Fig. 9 zeigt ein Diagramm 700 mit Kennlinien 702, 704, 706, 708 magnetisch halbharter Materialien. In dem Diagramm 700 ist auf einer x-Achse eine Induktion B und auf einer y-Achse eine Feldstärke H aufgetragen. Im Übrigen wird ergänzend insbesondere auf Fig. 7 und die zugehörige Beschreibung verwiesen.

### Bezugszeichenliste

- 100: Antriebsstrang
- 102: Kupplungseinrichtung
- 104: Brennkraftmaschine
- 106: Zweimassenschwungrad
- 108: elektrische Maschine
- 110: Getriebe
- 112: Rad
- 114: Eingangsteil
- 116: Ausgangsteil
- 118: Stator
- 120: Rotor

- 200: Rotor
- 202: Lamellenkupplung
- 204: Betätigungseinrichtung
- 206: Drehachse
- 208: Innenlamelle
- 210: Außenlamelle
- 212: Druckplatte
- 214: Anpressplatte
- 216: Rampenring
- 218: Kugel
- 220: Freilaufeinrichtung
- 222: Innenring
- 224: Außenring
- 226: Sperrkörper
- 228: Freilauftopf
- 230: Welle
- 232: Momentenfühler
- 234: erstes Fühlerteil
- 236: zweites Fühlerteil

- 300: Magnetfeldbremse
- 302: Bremsenrotor
- 304: Innenstator
- 306: Außenstator
- 308: erster Klauenpol
- 310: Scheibenabschnitt
- 312: Polklaue
- 314: zweiter Klauenpol
- 316: Scheibenabschnitt
- 318: Polklaue
- 320: Zentralspule
- 322: Bodenabschnitt
- 324: Wandabschnitt
- 326: Trägerteil
- 328: Lager

- 400: Magnetfeldbremse
- 402: Bremsenstator
- 404: Bremsenrotor
- 406: Trägerteil
- 408: erster Klauenpol
- 410: zweiter Klauenpol
- 412: Zentralspule
- 414: erster Scheibenabschnitt
- 416: äußere Polklaue
- 418: zweiter Scheibenabschnitt
- 420: innere Polklaue
- 422: Bodenabschnitt
- 424: Wandabschnitt
- 426: Lager
- 428: Außenverzahnung

- 500: Bremsenrotor
- 502: erster Rotorabschnitt
- 504: zweiter Rotorabschnitt
- 506: Bodenabschnitt
- 508: Wandabschnitt
- 510: Öffnung
- 512: Verzahnung
- 514: Wirbelstromabschnitt
- 516: Hystereseabschnitt

- 600: Diagramm
- 602: Kennlinie
- 604: Kennlinie
- 606: Kennlinie

- 700: Diagramm
- 702: Kennlinie
- 704: Kennlinie
- 706: Kennlinie
- 708: Kennlinie

## Patentansprüche

1. Betätigungseinrichtung (204) für eine Kupplungseinrichtung (102, 202), wobei die Betätigungseinrichtung (204) eine Magnetfeldbremse (300, 400) mit einem Bremsenstator (402) und einem Bremsenrotor (302, 404, 500) aufweist, wobei die Magnetfeldbremse (300, 400) als Wirbelstrombremse und/oder als Hysteresebremse betreibbar ist,
**dadurch gekennzeichnet, dass**
der Bremsenstator (402) einen Innenstator (304, 408) mit einer Zentralspule (320, 412) und einen spulenlosen Außenstator (306, 410) aufweist.

2. Betätigungseinrichtung (204) nach Anspruch 1, **dadurch gekennzeichnet, dass** der Bremsenrotor (302, 404, 500) einen ersten Rotorabschnitt (502) aus einem ersten Material und einen zweiten Rotorabschnitt (504) aus einem zweiten Material aufweist.

3. Betätigungseinrichtung (204) nach Anspruch 2, **dadurch gekennzeichnet, dass** das erste Material einen geringen elektrischen Widerstand aufweist.

4. Betätigungseinrichtung (204) nach einem der Ansprüche 2 bis 3, **dadurch gekennzeichnet, dass** das zweite Material ein magnetisch halbhartes Material ist.

5. Betätigungseinrichtung (204) nach einem der Ansprüche 2 bis 4, **dadurch gekennzeichnet, dass** der erste Rotorabschnitt (502) einen Träger für den zweiten Rotorabschnitt (504) bildet.

6. Betätigungseinrichtung (204) nach einem der Ansprüche 2 bis 5, **dadurch gekennzeichnet, dass** der zweite Rotorabschnitt (504) eine ringartige Form aufweist und mit dem ersten Rotorabschnitt (502) verpresst ist.

7. Betätigungseinrichtung (204) nach einem der Ansprüche 1 bis 6, **dadurch gekennzeichnet, dass** der Bremsenrotor (302, 404, 500) eine topfartige Form mit einem Bodenabschnitt (322, 422, 506) und einem Wandabschnitt (324, 424, 508) aufweist und der Wandabschnitt (324, 424, 508) zwischen dem Innenstator (304, 408) und dem Außenstator (306, 410) angeordnet ist.

8. Betätigungseinrichtung (204) nach einem der Ansprüche 1 bis 7, **dadurch gekennzeichnet, dass** der Innenstator (304) einen ersten Klauenpol (308) mit ersten Polklauen (312) und einen zweiten Klauenpol (314) mit zweiten Polklauen (318) aufweist, die Zentralspule (320) von dem ersten Klauenpol (308) mit seinen ersten Polklauen (312) und dem zweiten Klauenpol (314) mit seinen zweiten Polklauen (318) umgriffen ist und der Außenstator (306) eine flachringartige Form aufweist.

9. Betätigungseinrichtung (204) nach einem der Ansprüche 1 bis 7, **dadurch gekennzeichnet, dass** der Bremsenstator (402) einen ersten Klauenpol (408) mit ersten Polklauen (416), der den Außenstator bildet, und einen zweiten Klauenpol (410) mit zweiten Polklauen (420), der den Innenstator bildet, aufweist und die Zentralspule (412) von dem zweiten Klauenpol (410) mit seinen zweiten Polklauen (420) umgriffen ist.

## Claims

1. Actuating device (204) for a clutch device (102, 202), wherein the actuating device (204) has a magnetic field brake (300, 400) comprising a brake stator (402) and a brake rotor (302, 404, 500), wherein the magnetic field brake (300, 400) can be operated as an eddy current brake and/or as a hysteresis brake,
**characterized in that**
the brake stator (402) has an internal stator (304, 408) comprising a central coil (320, 412) and a coil-free external stator (306, 410).

2. Actuating device (204) according to Claim 1, **characterized in that** the brake rotor (302, 404, 500) has a first rotor section (502) which is composed of a first material and has a second rotor section (504) which is composed of a second material.

3. Actuating device (204) according to Claim 2, **characterized in that** the first material has a low electrical resistance.

4. Actuating device (204) according to either of Claims 2 and 3, **characterized in that** the second material is a magnetically semi-hard material.

5. Actuating device (204) according to one of Claims 2 to 4, **characterized in that** the first rotor section (502) forms a support for the second rotor section (504).

6. Actuating device (204) according to one of Claims 2 to 5, **characterized in that** the second rotor section (504) has an annular shape and is pressed to the first rotor section (502).

7. Actuating device (204) according to one of Claims 1 to 6, **characterized in that** the brake rotor (302, 404, 500) has a pot-like shape with a base section (322, 422, 506) and a wall section (324, 424, 508), and the wall section (324, 424, 508) is arranged between the internal stator (304, 408) and the external stator (306, 410).

8. Actuating device (204) according to one of Claims 1 to 7, **characterized in that** the internal stator (304) has a first claw pole (308) comprising first pole claws (312) and has a second claw pole (314) comprising second pole claws (318), the central coil (320) is engaged around by the first claw pole (308) by way of its first pole claws (312) and the second claw pole (314) by way of its second pole claws (318), and the external stator (306) has a flat ring-like shape.

9. Actuating device (204) according to one of Claims 1 to 7, **characterized in that** the brake stator (402) has a first claw pole (408) comprising first pole claws (416), which first claw pole forms the external stator, and has a second claw pole (410) comprising second pole claws (420), which second claw pole forms the internal stator, and the central coil (412) is engaged around by the second claw pole (410) by way of its second pole claws (420).

## Revendications

1. Dispositif d'actionnement (204) pour dispositif d'embrayage (102, 202), le dispositif d'actionnement (204) présentant un frein (300, 400) à champ magnétique doté d'un stator (402) de frein et d'un rotor (302, 404, 500) de frein, le frein (300, 400) à champ magnétique pouvant être utilisé comme frein à courants de Foucault et/ou comme frein à hystérésis,
**caractérisé en ce que**
le stator (402) du frein présente un stator intérieur (304, 408) doté d'une bobine centrale (320, 412) et un stator extérieur (306, 410) sans bobine.

2. Dispositif d'actionnement (204) selon la revendication 1, **caractérisé en ce que** le rotor (302, 404, 500) du frein présente une première partie de rotor (502) en un premier matériau et une deuxième partie de rotor (504) en un deuxième matériau.

3. Dispositif d'actionnement (204) selon la revendication 2, **caractérisé en ce que** le premier matériau présente une basse résistance électrique.

4. Dispositif d'actionnement (204) selon l'une des revendications 2 et 3, **caractérisé en ce que** le deuxième matériau est un matériau magnétiquement semi-dur.

5. Dispositif d'actionnement (204) selon l'une des revendications 2 à 4, **caractérisé en ce que** la première partie (502) du rotor forme un support pour la deuxième partie (504) du rotor.

6. Dispositif d'actionnement (204) selon l'une des revendications 2 à 5, **caractérisé en ce que** la deuxième partie (504) du rotor présente une forme annulaire et est comprimée sur la première partie (502) du rotor.

7. Dispositif d'actionnement (204) selon l'une des revendications 1 à 6, **caractérisé en ce que** le rotor de frein (302, 404, 500) présente la forme d'une cuvette dotée d'une partie de fond (322, 422, 506) et d'une partie de paroi (324, 424, 508) et **en ce que** la partie de paroi (324, 424, 508) est disposée entre le stator intérieur (304, 408) et le stator extérieur (306, 410).

8. Dispositif d'actionnement (204) selon l'une des revendications 1 à 7, **caractérisé en ce que** le stator intérieur (304) présente un premier pôle (308) à griffes doté de premières griffes (312) de pôle et un deuxième pôle (314) à griffes doté de deuxièmes griffes (318) de pôle, **en ce que** la bobine centrale (320) est chevauchée par les premières griffes (312) du premier pôle (308) à griffes et par les deuxièmes griffes (318) du deuxième pôle (314) à griffes, le stator extérieur (306) présentant la forme d'un anneau aplati.

9. Dispositif d'actionnement (104) selon l'une des revendications 1 à 7, **caractérisé en ce que** le stator (402) du frein présente un premier pôle (408) à griffes doté de premières griffes (416) de pôle et formant le stator extérieur et un deuxième pôle (410) à griffes doté de deuxièmes griffes (420) de pôle formant le stator intérieur, la bobine centrale (412) étant chevauchée par les deuxièmes griffes (420) du deuxième pôle (410) à griffes.
